Europäisches Patentamt

European Patent Office

Office européen des brevets

(19)

(11) Veröffentlichungsnummer: **0 239 889 B1**

## (12) EUROPÄISCHE PATENTSCHRIFT

(45) Veröffentlichungstag der Patentschrift: **07.08.91**

(51) Int. Cl.⁵: **G01N 27/38**

(21) Anmeldenummer: **87104101.8**

(22) Anmeldetag: **20.03.87**

(54) Verfahren und Vorrichtung zur Messung von Parametern in Suspensionen.

(30) Priorität: **29.03.86 DE 3610739**

(43) Veröffentlichungstag der Anmeldung:
**07.10.87 Patentblatt 87/41**

(45) Bekanntmachung des Hinweises auf die
Patenterteilung:
**07.08.91 Patentblatt 91/32**

(84) Benannte Vertragsstaaten:
**AT BE CH DE ES FR GB GR IT LI LU NL SE**

(56) Entgegenhaltungen:
**AT-A- 354 162**
**US-A- 3 188 565**
**US-A- 3 464 908**
**US-A- 3 471 775**

**Arcus-Funktionen aus K. Gieck, Technische**
**Formelsammlung, 22. Auflage (1969), G 1.**

(73) Patentinhaber: **KRC Umwelttechnik GmbH**
**Alfred-Nobel-Strasse 20**
**W-8700 Würzburg 1(DE)**

(72) Erfinder: **Scherer, Hans-Joachim, Dipl.-Ing.**
**Am Oberen Bühl 3**
**W-8717 Mainbernheim(DE)**
Erfinder: **Gazinski, Andreas, Dipl.-Ing.**
**Am Schenkenfeld 27**
**W-8707 Veitshöchheim(DE)**

(74) Vertreter: **Werner, Hans-Karsten, Dr. et al**
**Deichmannhaus am Hauptbahnhof**
**W-5000 Köln 1(DE)**

## Beschreibung

Gegenstand der vorliegenden Erfindung sind ein Verfahren und eine Vorrichtung zur Messung von Parametern in Suspensionen von spezifisch schwereren Teilchen als die Flüssigkeit mittels Meßsonden im Inneren eines strömungsberuhigten senkrecht stehenden, kegelstumpfförmigen Durchlaufgefäßes.

In der chemischen Verfahrenstechnik ist es notwendig und üblich, eine Reihe von Parametern kontinuierlich oder intermittierend zu messen. Zu solchen Parametern zählen beispielsweise der pH-Wert, das Redoxpotential, die Leitfähigkeit, der Gehalt an freiem oder gelöstem Sauerstoff sowie die Konzentration anderer in der Flüssigkeit gelöster Komponenten. Die Messung dieser Parameter in Suspensionen bereitet stets gewisse Schwierigkeiten, insbesondere wenn die Suspensionen noch verschmutzende, anhaftende oder kristallisierende Komponenten enthalten. Rasch bewegte Suspensionen führen an den Meßsonden zu Fehlmessungen und Abrasion. Es wird daher sehr häufig ein Teilstrom der Suspension durch ein strömungsberuhigtes Durchlaufgefäß geleitet, in dessen Inneren die Meßsonden für die Parameter angebracht sind. Der Nachteil derartiger Durchlaufgefäße ist jedoch, daß sie relativ leicht verstopfen und relativ oft ersetzt oder gereinigt werden müssen.

Aus der US-A-3,464,908 ist eine Vorrichtung bekannt zur Messung der Wasserstoffionenkonzentration in einer Suspension, in der wie in einer Zentrifuge die schwereren, sich schnell bewegenden abrasiven Feststoffe der Suspension abgetrennt werden von den sich langsamer bewegenden, feineren und weniger abrasiven Teilchen der Suspension. Dabei sollen diese feineren Teilchen dennoch in der Lage sein, die Wasserstoffelektrode zu reinigen. Hierzu ist noch immer eine gewisse abrasive Wirksamkeit notwendig. Es handelt sich somit um eine Apparatur, in der die Suspension relativ rasch strömt und es daher zu keinen Sedimentationen kommen kann.

Die Vorrichtung gemäß US-A-3 464 908 besteht aus zwei Gefäßen, von denen eines kegelstumpfförmig ausgestaltet ist. Durch dieses Gefäß wird jedoch die Suspension von oben nach unten geleitet, sodaß es zu Klassierungen wie in einem Hydrozyklon kommt.

Die Erfindung hat sich die Aufgabe gestellt, ein Verfahren und eine Vorrichtung zu entwickeln, mit deren Hilfe es möglich ist, kontinuierlich oder intermittierend Parameter in Suspension von spezifisch schwereren Teilchen als die Flüssigkeit zu messen, ohne daß es zur Verstopfung, Verklebung oder sonstigen Beeinträchtigungen des Durchlaufgefäßes und der Meßsonden kommt.

Dabei sollte auf mechanische Reinigungsvorrichtungen verzichtet werden, da diese aufwendige und kostspielige Dichtungsprobleme aufweisen.

Diese Aufgabe kann in überraschend einfacher Weise dadurch gelöst werden, daß der zu messende Strom der Suspension in dem Durchlaufgefäß am unteren Ende tangential eingeführt und am oberen Ende in gleicher Drehrichtung tangential abgeführt wird, wobei sich die Winkelgeschwindigkeit des aufsteigenden schraubenförmigen Stroms von unten nach oben verkleinert und die Fliehkraftkomponente parallel zur Gefäßwand für die spezifisch schwersten Teilchen der Suspension größer ist als die Gravitationskomponente.

Hierdurch entsteht im Inneren des senkrecht stehenden, kegelstumpfförmigen Durchlaufgefäßes eine Rotation, und die spezifisch schwereren Teilchen der Suspension werden schraubenförmig durch das Durchlaufgefäß hindurch geleitet. Dies führt zu einer dauernden Selbstreinigung des Durchlaufgefäßes und vermeidet jegliche Ablagerungen, Verstopfungen oder Störungen. Die Meßsonden können im Inneren dieses Durchlaufgefäßes, vorzugsweise sogar im Zentrum des Durchlaufgefäßes angebracht werden. Sie messen jetzt in einer stark strömungsberuhigten Zone und sind daher auch nicht der gefürchteten Abrasion ausgesetzt.

Weiterhin wird erfindungsgemäß bei aufsteigendem Strom gemessen, da dann nach der kontinuierlichen oder intermittierenden Messung das Durchlaufgefäß mit der reinen Flüssigkeit gespült werden kann und, wie ein Siphon gegen den Einfluß von Teilchen der Suspension geschützt, unverzüglich für weitere Messungen bereitsteht.

Zur Durchführung des Verfahrens bei aufsteigendem Strom ist es notwendig, daß die Winkelgeschwindigkeit der rotierenden Suspension von unten nach oben verkleinert wird. Konstruktiv wird dies erreicht, indem der Durchmesser des Durchlaufgefäßes oben größer ist als der Durchmesser unten.

Gemäß der Erfindung ist die Fliehkraftkomponente parallel zur gefäß wand für die spezifisch schwersten Teilchen der Suspension größer als die Gravitationskomponente.

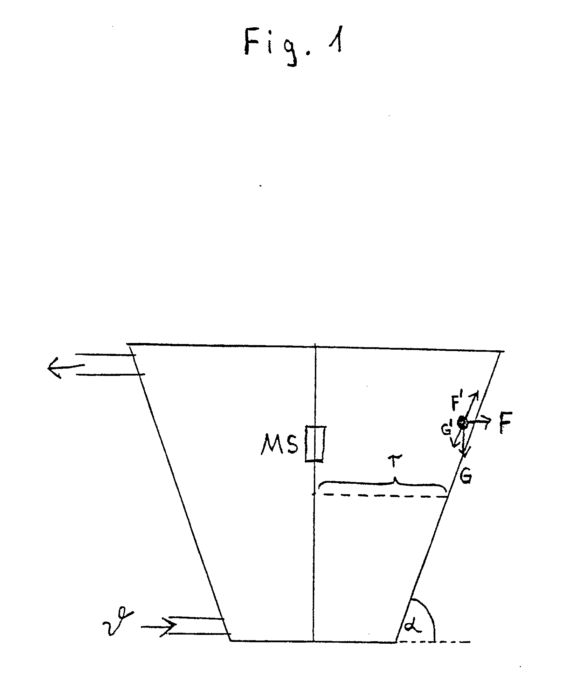

In der anliegenden Fig. 1 ist eine konstruktive Ausgestaltung für die Messung im aufsteigenden Strom schematisch dargestellt. Hierin bedeuten:

MS     die Meßsonde,
F     die Fliehkraft,
G     die Gewichtskraft,
F'     die Fliehkraftkomponente parallel zur gefäß wand und
G'     die Gravitationskomponente eines Teilchens in der Suspension.

Es handelt sich um eine Vorrichtung gemäß Anspruch 2.

Durch die kegelstumpfartige Ausbildung des Durchlaufgefäßes wird erreicht, daß wie in einer Zentrifuge die spezifisch schwersten Teilchen der Suspension zunächst zur Wand hin wandern und dort durch die Fliehkraftkomponente parallel zur gefäß wand schneller nach oben befördert werden als die Suspension als ganzes. Gerade die größten und schwersten Teilchen wandern somit schneller von unten nach oben durch das Durchlaufgefäß.

Erprobt wurden das erfindungsgemäße Verfahren und die Vorrichtung bei der pH-Messung in den Waschsuspensionen von Rauchgaswäschen, welche mit Kalkstein als Absorptionsmittel arbeiten und aus denen Calciumsulfat-Dihydrat (Gips) abgeschieden wird. Bisher wurde in solchen Anlagen der pH-Wert gemessen in einem zylindrischem Topf mit zentrisch angeordneten Elektroden, einem Eintritt in Verlängerung des Topfradius und einem Austritt zentrisch nach unten. In diesen Durchlaufgefäßen hat sich stets nach einiger Zeit Kalksteinsuspension und kristallisierender Gips abgesetzt, so daß es zu Störungen bei der Messung kam. Eine erfindungsgemäß ausgestaltete Vorrichtung gemäß Fig. 1 arbeitete hingegen über Monate störungsfrei und zeigte bei gelegentlichen Kontrollen, daß das Innere des Durchlaufgefäßes völlig sauber und frei von Ablagerungen blieb. Die Meßsonde wurde in dem stark strömungsberuhigten Zentrum des Durchlaufgefäßes keiner sichtbaren Abrasion ausgesetzt. Da die erfindungsgemäße Vorrichtung praktisch keine bewegten Teile oder Verschleißteile aufweist, ist sie geeignet, über lange Zeiträume für kontinuierliche und intermittierende Messungen eingesetzt zu werden. Bei intermittierender Messung wird nach der Messung das Durchlaufgefäß mit reiner Flüssigkeit gespült und steht verzögerungsfrei jederzeit für neue Messungen zur Verfügung. Es leuchtet ein, daß auch zur Messung anderer Parameter in anderen Suspensionen die gleichen guten Ergebnisse zu erwarten sind. Das erfindungsgemäße Verfahren und die erfindungsgemäße Vorrichtung sind daher universell einsetzbar.

## Patentansprüche

1. Verfahren zur Messung von Parametern in Suspensionen von spezifisch schwereren Teilchen als die Flüssigkeit mittels Meßsonden im Inneren eines strömungsberuhigten, senkrecht stehenden, kegelstumpfförmigen Durchlaufgefäßes, dadurch gekennzeichnet, daß der zu messende Strom der Suspension in dem Durchlaufgefäß am unteren Ende tangential eingeführt und am oberen Ende in gleicher Drehrichtung tangential abgeführt wird, wobei sich die Winkelgeschwindigkeit des aufsteigenden schraubenförmigen Stroms von unten nach oben verkleinert und die Fliehkraftkomponente parallel zur Gefäßwand für die spezifisch schwersten Teilchen der Suspension größer ist als die Gravitationskomponente.

2. Vorrichtung zur Durchführung des Verfahrens gemäß Anspruch 1 mit einem senkrecht stehenden, kegelstumpfförmigen Durchlaufgefäß, welches am unteren Ende eine tangentiale Eintrittsöffnung und am oberen Ende in gleicher Drehrichtung eine tangentiale Austrittsöffnung aufweist und dessen Durchmesser oben größer ist als der Durchmesser unten, sowie einer Meßsonde im strömungsberuhigten inneren Bereich der Flüssigkeit, wobei die Vorrichtung so ausgebildet ist, daß die Fliehkraftkomponente parallel zur Gefäßwand für die spezifisch schwersten Teilchen der Suspension größer ist als die Gravitationskomponente.

## Claims

1. A method for measuring parameters in suspensions containing particles which are specifically heavier than the liquid by means of measuring probes in the interior of a vertically positioned truncated-conical quiesced-flow throughput vessel, characterized in that the stream to be measured of the suspension is tangentially introduced into the flow vessel at the bottom end thereof and is tangentially withdrawn therefrom at the top end thereof under the same direction of rotation, while the angular velocity of the ascending helical stream is decreased from the bottom to the top and the centrifugal force ccmponent parallel to the vessel wall for the specifically heaviest particles of the suspension is greater than the gravitational component.

2. A device for carrying out the process according to claim 1, comprising a vertically positioned, truncated-conical throughput vessel which has a tangential inlet opening at the bottom end thereof and a tangential outlet opening at the top end thereof in the same direction of rotation and the diameter of which at the top is larger than the diameter at the bottom, and a measuring probe provided in the inner quiesced-flow region of the liquid, the device being shaped so that the centrifugal force component parallel to the vessel wall for the specifically heaviest particles of the suspension is greater than the gravitational component.

## Revendications

1. Procédé pour mesurer des paramètres dans des suspensions comportant des particules spécifiquement plus lourdes que le liquide, au moyen de sondes de mesure placées à l'intérieur d'un récipient de passage disposé verticalement, de forme tronconique, et donnant un débit tranquillisé, caractérisé en ce que le courant de la suspension à mesurer est introduit tangentiellement à la partie inférieure dans le récipient de passage et ressort tangentiellement dans le même sens de rotation à la partie supérieure, tandis que la vitesse angulaire du courant montant suivant une hélice diminue de bas en haut et que la composante parallèle à la paroi du récipient de la force centrifuge est plus grande, pour les particules spécifiquement plus lourdes de la suspension, que la composante de gravité.

2. Dispositif pour la mise en oeuvre du procédé suivant la revendication 1, comportant un récipient de passage disposé verticalement, de forme tronconique, qui présente, à l'extrémité inférieure, un orifice d'entrée tangentiel et, à l'extrémité supérieure, dans le même sens de rotation, un orifice de sortie tangentiel, et dont le diamètre du haut est plus grand que le diamètre du bas, ainsi qu'une sonde de mesure dans la zone intérieure du liquide où le courant est tranquillisé, le dispositif étant réalisé de telle façon que la composante parallèle à la paroi du récipient de la force centrifuge est plus grande, pour les particules spécifiquement plus lourdes de la suspension, que la composante de gravité.

# Fig. 1